# EUROPEAN PATENT APPLICATION

(11) **EP 4 645 525 A1**
(43) Date of publication of application: **05.11.2025**
(21) Application number: 25151790.0
(22) Date of filing: 14.01.2025
(51) Int. Cl.: H01M 10/613, H01M 50/204, H01M 10/617, H01M 10/6568, H01M 10/6556

(54) **FLOW DISTRIBUTION ASSEMBLY AND BATTERY RACK**

(30) Priority: 30.04.2024 CN 202410551921; 30.04.2024 CN 202420959783 U
(71) Applicant: Eve Energy Storage Co., Ltd., Wuhan, Hubei 430000 (CN)
(72) Inventor: DU, Senyao, Wuhan,Hubei 430000 (CN); ZHUO, Wei, Wuhan,Hubei 430000 (CN); YI, Haohao, Wuhan,Hubei 430000 (CN); ZHU, Yuan, Wuhan,Hubei 430000 (CN); LIU, Jianbo, Wuhan,Hubei 430000 (CN)
(74) Representative: Herrero & Asociados, S.L.

(57) **Abstract**

A flow distribution assembly (300) and a battery rack (10, 30, 50) are provided. The flow distribution assembly (300) includes a mounting component (320) and a flow distribution component (100, 310, 500). The flow distribution component (100, 310, 500) is provided with a flow guide hole (130, 315). The flow distribution component (100, 310, 500) is connected to the mounting component (320), and is capable of rotating relative to the mounting component (320) to change a flow direction of a medium distributed through the flow guide hole (130, 315).

## Description

### TECHNICAL FIELD

The present disclosure relates to the technology field of immersion energy storage, and in particular, to a flow distribution assembly and a battery rack.

### BACKGROUND

In practical applications, batteries generate a large amount of heat during charging and discharging. In order to reduce the heat generated during charging and discharging of the battery, air cooling, cooling of phase change materials, and cooling of immersion fluid, and the like are generally adopted.

In related technologies, a battery device with an immersion fluid cooling system generally has a plurality of spaced immersion battery compartments, which are directly connected to the fluid channels of the immersion fluid cooling system through pipelines. Immersion fluid can circulate in the pipelines between the immersion battery compartments and the fluid channels to achieve cooling.

During the immersion fluid circulation process between the a plurality of immersion battery compartments and the fluid channels, the temperature of the battery modules placed in the plurality of immersion battery compartments may be inconsistent due to the arrangement of the battery modules, boundary convection, and other factors.

### SUMMARY

In a first aspect, the present disclosure provides a flow distribution assembly, which includes a mounting component and a flow distribution component. The flow distribution component is provided with a flow guide hole, and configured to distribute a medium through the flow guide hole. The flow distribution component is connected to the mounting component, and is capable of rotating relative to the mounting component to change a flow direction of the medium distributed through the flow guide hole.

In a second aspect, the present disclosure provides a battery rack, which includes a rack body and a plurality of flow distribution components. The rack body is provided with a plurality of battery compartments, a plurality of mounting holes, and a flow guide channel. Each battery compartment is in communication with at least one of the mounting holes, and the flow guide channel is in communication with the plurality of mounting holes. The plurality of flow distribution components are detachably installed in the plurality of mounting holes of the rack body, respectively. The flow distribution component is provided with a flow guide hole, and is configured to distribute, through its flow guide hole, a medium placed in the flow guide channel into the battery compartment communicating with the flow guide hole.

In the embodiments of the present disclosure, the flow distribution component can rotate relative to the mounting component, and during the rotation of the flow distribution component relative to the mounting component, the flow guide hole of the flow distribution component will rotate along with the flow distribution component, thereby changing the position of the flow guide holes as needed based on the rotation of the flow distribution component relative to the mounting component, thereby changing the flow direction of the medium distributed through the flow guide hole.

When it is determined that the temperature at a predetermined position of the battery device is too high, a flow direction of the flow guide hole of the flow distribution component can be adjusted, or the medium incident angle can be adjusted, so that the medium distributed by the flow distribution component flows to the predetermined position, thereby specifically improving the flow performance of the medium at the predetermined position to reduce the temperature of the predetermined position, thereby improving the temperature uniformity of the battery device during charging and discharging.

### BRIEF DESCRIPTION OF THE DRAWINGS

FIG. 1 is a schematic structural diagram of a first battery rack according to some embodiments of the present disclosure;
FIG. 2 is an enlarged diagram of a partial structure at an area X shown in FIG. 1;
FIG. 3 is a schematic structural diagram of a rack body of the first battery rack according to some embodiments of the present disclosure;
FIG. 4 is an enlarged diagram of a partial structure at an area Y shown in FIG. 3;
FIG. 5 is a schematic structural diagram of a flow distribution component of the first battery rack according to some embodiments of the present disclosure;
FIG. 6 is a schematic structural diagram of a flow distribution assembly in a first state according to some embodiments of the present disclosure;
FIG. 7 is a schematic structural diagram of the flow distribution assembly in a second state according to some embodiments of the present disclosure;
FIG. 8 is an exploded diagram of the flow distribution assembly according to some embodiments of the present disclosure;
FIG. 9 is a schematic structural diagram of an mounting component of the flow distribution assembly according to some embodiments of the present disclosure;
FIG. 10 is a schematic structural diagram of a flow distribution component of the flow distribution assembly according to some embodiments of the present disclosure;
FIG. 11 is a schematic structural diagram of the flow distribution component of the flow distribution assembly viewed from another perspective according to some embodiments of the present disclosure;
FIG. 12 is a schematic structural diagram of a second battery rack according to some embodiments of the present disclosure;
FIG. 13 is an enlarged diagram of a partial structure at an area Z shown in FIG. 12;
FIG. 14 is a schematic structural diagram of a third battery rack according to some embodiments of the present disclosure;
FIG. 15 is an enlarged diagram of a partial structure at an area E shown in FIG. 14.

Reference numerals in the drawings: 10, battery rack; 100, flow distribution component; 110, flow distribution body; 120, first detachable structure; 130, flow guide hole; 131, first hole; 132, second hole; 200, rack body; 201, flow guide channel; 202, battery compartment; 203, mounting hole; 204, flow inlet; 210, flow guide plate; 220, bottom plate; 230, side plate; 240, partition plate; 250, connector; 211, second detachable structure; D1, length direction; D2, width direction;

30, battery rack; 300, flow distribution assembly; 310, flow distribution component; 311, flow distribution body; 312, limiting structure; 313, inlet; 314, outlet; 315, flow guide hole; 316, shaft hole; 317, second positioning groove; 320, mounting component; 321, first mounting portion; 3212, first arc-shaped surface; 322, second mounting portion; 3222, second arc-shaped surface ,323, middle mounting portion; 324, mounting space; 325, first detachable structure; 326, first positioning groove; 330, positioning component; 340, rotating shaft; 3211, first limiting surface; 3212, first arc surface; 3221, second limiting surface; 3222, second arc surface; 400, rack body; 401, flow guide channel; 402, battery compartment; 403, mounting hole; 404, flow inlet; 410, flow guide plate; 420, bottom plate; 430, side plate; 440, partition plate; 450, connector; 411, second detachable structure; D3, length direction; D4, width direction;

50, battery rack; 500, flow distribution component; 600, rack body; 601, flow guide channel; 602, battery compartment; 603, mounting hole; 604, flow inlet; 610, flow guide plate; 620, bottom plate; 630, side plate; 640, partition plate; 650, connector; 611, third positioning groove; 612, rotating shaft; 700, positioning component.

### DETAILED DESCRIPTION

Embodiments of the present disclosure provide a flow distribution component, a flow distribution assembly and a battery rack. The flow distribution component and/or the flow distribution assembly can be applied to the battery rack. It should be understood that the battery rack can include the flow distribution component or the flow distribution assembly. It should also be understood that the flow distribution component, the flow distribution assembly and the battery rack can all be applied to immersion scenarios, for example, the flow distribution component, the flow distribution assembly and the battery rack can all be applied in the testing of battery devices. For those skilled in the art, the flow distribution component and the flow distribution assembly are not limited to applications in immersion scenarios, and their applications in submerged scenarios is only an exemplary illustration of the present disclosure.

Technical solutions of the embodiments of the present disclosure will be clearly and completely described below with reference to the accompanying drawings of the embodiments of the present disclosure.

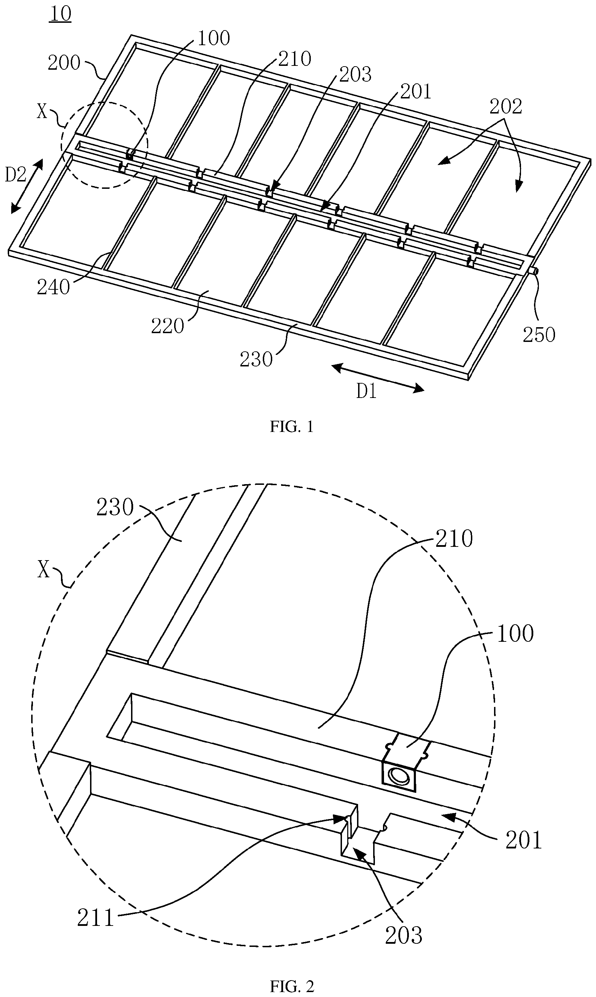

As shown in FIG. 1 to FIG. 5, a battery rack 10 includes a rack body 200 and a plurality of flow distribution components 100. The plurality of flow distribution components 100 are detachably connected to the rack body 200. Therefore, the number and installation positions of the flow distribution components 100 installed on the rack body 200 can be configured according to actual needs. FIG. 1 schematically shows an installation relationship between one flow distribution component 100 and the rack body 200. It can be understood that FIG. 1 is an exemplary diagram, and the number of the flow distribution components 100 illustrated in FIG. 1 does not constitute a limitation on the number of the flow distribution components 100 of the embodiments of the present disclosure.

It should be noted that in battery racks of related battery devices, the battery rack is provided with a plurality of flow guide holes. The flow guide holes formed on the battery rack are used to guide mediums. In related technologies, the plurality of flow guide holes of the battery rack have substantially the same flow velocity and flow direction. However, in practical applications, in the battery device, the temperature of the battery modules placed in a plurality of immersion battery compartments may be inconsistent caused by the arrangement of the battery modules, boundary convection, and other factors.

It should also be noted that in the immersion scenario of the related technologies, a flow field of the immersion scenario requires adjusting the structure of the battery rack according to different mediums, resulting in high costs. Moreover, the flow allocation of an immersion scenario test prototype cannot be adjusted flexibly, resulting in high investment costs and long research and development cycles for the immersion scenario test prototype.

In the battery rack 10 provided in the embodiments of the present disclosure, since the rack body 200 and the plurality of flow distribution components 100 are designed to be detachably connected, the flexibility of deployment of the flow distribution components 100 can be increased to a certain extent. For example, in a first situation, the rack body 200 needs to be equipped with N flow distribution components 100, while in a second situation, the rack body 200 needs to be equipped with M flow distribution components 100, where M and N are both integers greater than zero, and M is greater than N. It should be understood that there may be other situations, which will not be illustrated one by one here. Therefore, the battery rack 10 of the embodiment of the present disclosure can improve flexibility to a certain extent during the deployment of the flow distribution components 100 of the immersion scene test prototype, thereby reducing costs and shortening the research and development cycle to a certain extent. That is, in the embodiments of the present disclosure, since the plurality of flow distribution components 100 can be detachably connected to the rack body 200, the number of the flow distribution components 100 of the present disclosure can be configured according to actual needs.

For example, the contours of the plurality of flow distribution components 100 are substantially consistent, which facilitates processing and molding of the flow distribution components 100, such as using injection molding to form a plurality of flow distribution components 100.

Each flow distribution component 100 can distribute a medium, or the flow distribution component 100 is configured to distribute the medium. In some situations, each flow distribution component 100 can distribute liquid. It can also be understood that each flow distribution component 100 can transmit liquid.

For example, at least two of the plurality of flow distribution components 100 distribute the medium at different flow velocities. The at least two flow distribution components 100 distribute the medium at different flow velocities can also be understood as that the at least two flow distribution components have different medium flow velocity distribution functions. Therefore, the battery rack 10 of the present disclosure can flexibly configure flow distribution components 100 with different medium flow velocity functions according to different needs, such as flexibly configuring flow distribution components 100 with different medium flow velocity functions according to different mediums. In practical applications, when it is determined that the temperature at a predetermined position of the battery device is too high, a flow distribution component 100 with a larger medium flow velocity can be configured, so that the flow distribution component 100 can provide a greater medium flow velocity for the predetermined position, so that the medium flow velocity at the predetermined position can be increased to speed up the reduction of the temperature at the predetermined position. Thus, the temperature uniformity of the battery device during charging and discharging can be improved.

That is, the battery rack 10 of the present disclosure can flexibly configured different flow distribution components 100 according to different needs. For example, when the temperature at a predetermined position is high, a flow distribution component 100 with a larger flow velocity of the distribution medium can be used to distribute the medium, which can improve the temperature uniformity of the battery device during charging and discharging.

In addition, the battery rack 10 of the present disclosure can configure the flow distribution components 100 with different medium flow velocity functions as needed, so the rack body 200 of the embodiments of the present disclosure can be adapted to different needs, and the flow distribution components 100 installed on the rack body 200 can be determined according to different needs. Compared with the related technologies that one rack body is adapted to one kind of need, or the related technologies that one rack body is adapted to one medium, or the related technologies that one rack body is adapted to one medium flow velocity, the battery rack 10 of the present disclosure can significantly reduce costs. Moreover, the flow allocation of the immersion scene test prototype can be flexibly adjusted, which can reduce the investment costs of the immersion scene test prototype and shorten the research and development cycles.

In addition, since the contours of the plurality of flow distribution components 100 of the present disclosure are substantially consistent, and at least two flow distribution components 100 distribute the medium at different flow velocities, in practical applications, the flow distribution components 100 of a required specification can be installed at predetermined positions of the rack body 200 according to actual needs. During an actual test process, it is convenient to configure the flow distribution components 100 of different specifications for testing without any installation obstacles.

Please referring to FIG. 1 again, in the embodiments, a length direction D1 and a width direction D2 of the battery rack 10 are substantially perpendicular to each other.

The rack body 200 is provided with a flow guide channel 201, a plurality of battery compartments 202, and a plurality of mounting holes 203. The plurality of battery compartments 202 are in communication with the plurality of mounting holes 203, and each battery compartment 202 is in communication with at least one mounting hole 203. The embodiments of the present disclosure take the plurality of battery compartments 202 being in one-to-one communication with the plurality of mounting holes 203 as an example. The flow guide channel 201 is in communication with the plurality of mounting holes 203. It should be understood that when the mounting holes 203 are not installed with the flow distribution components 100, the flow guide channel 201 directly communicates with the plurality of battery compartments 202 through the plurality of mounting holes 203.

The plurality of battery compartments 202 can be divided into two groups, with one group being located at one side of the flow guide channel 203, and the other group being located at the other side of the flow guide channel 203. One group of battery compartments 202, the flow guide channel 203, and the other group of battery compartments 202 are sequentially arranged in the width direction D2 of the battery rack 10. There are a plurality of battery compartments 202 on both sides of the flow guide channel 203, and the plurality of battery compartments 202 on the same side of the flow guide channel 203 are arranged at intervals in sequence along the length direction D1 of the battery rack 10.

Please continue to refer to FIG. 1 to FIG. 4, the rack body 200 includes a flow guide plate 210, a bottom plate 220, side plates 230, and a plurality of partition plates 240. The flow guide plate 210, the side plates 230, and the partition plates 240 are all connected to the same surface of the bottom plate 220, to together define the plurality of battery compartments 202. The flow guide plate 210, the side plates 230 and the bottom plate 220 together define the flow guide channel 201. The plurality of mounting holes 203 are all formed on the flow guide plate 210.

For example, the side plates 230 are connected to circumference edges of the bottom plate 220, and the plurality of partition plates 240 and the flow guide plate 210 are surrounded by the side plates 230. For example, the side plates 230 may surround the bottom plate 220 and form a cuboid space together with the bottom plate 220. The flow guide plate 210 extends along the length direction D1 of the battery rack 10. Each of the plurality of partition plates 240 extends along the width direction D2 of the battery rack 10, and one end of each of the plurality of partition plates 240 is connected to an inner surface of the side plate 230, and the other end of each of the plurality of partition plates 240 is connected to the flow guide plate 210.

In some embodiemnts, there are two flow guide plates 210, which are spaced apart from each other along the width direction D2 of the battery rack 10. The two flow guide plates 210 are spaced apart by the flow guide channel 201. One end of each of the two guide plates 210 is connected to an inner surface of the side plate 230 located at one side of the rack body 200, and the other end of each of the two guide plates 210 is connected to an inner surface of an other side plate 230 located on an opposite side of the rack body 200.

For example, the plurality of partition plates 240 may be divided into two groups, with the two groups of partition plates 240 corresponding one-to-one with the two groups of battery compartments 202. The same group of partition plates 240 are spaced along the length direction D1 of the battery rack 10, with one battery compartment 202 between two adjacent partition plates 240.

Each flow guide plate 210 is provided with a plurality of mounting holes 201, and each mounting hole 201 can directly communicate with one battery compartment 202 and the flow guide channel 201. In some embodiemnts, the number of mounting holes 201 formed on the two guide plates 210 is the same. For example, the positions of the mounting holes 201 formed on one of the two guide plates 210 are opposite to the positions of the mounting holes 201 formed on the other one of the two guide plates 210. It should be noted that the positions and the number of the mounting holes 201 formed on each flow guide plate 210 can be set according to actual needs.

In some embodiments, the two flow guide plates 210 are substantially flush with each other at surfaces away from the bottom plate 220.

In some embodiments, the height of the two guide plates 210 is not higher than the height of the side plates 230. For example, one side of the two guide plates 210 away from the bottom plate 220 is substantially flush with one side of the side plate 230 away from the bottom plate 220. Another example is that one side of the two guide plates 210 away from the bottom plate 220 is slightly lower than one side of the side plate 230 away from the bottom plate 220. In other words, a vertical distance between a top surface of the two guide plates 210 and the bottom plate 220 is not greater than a vertical distance between a top surface of the side plate 230 and the bottom plate 220.

Please continue to refer to FIG. 1 to FIG. 4, the rack body 200 is further provided with a flow inlet 204, which penetrates one of the side plates 230 adjacent to the flow guide channel 201, and communicates with the flow guide channel 201.

In some embodiments, the rack body 200 is further provided with a connector 250. The connector 250 is connected to an outer surface of the one of the side plates 230. The flow inlet 204 penetrates the connector 250 and the one of the side plate 230, and communicates with the flow guide channel 201.

Each battery compartment 202 can accommodate a cell, or a battery component.

The plurality of flow distribution components 100 can be installed in the mounting holes 203, respectively. When the plurality of flow distribution components 100 are connected to the rack body 200, the plurality of flow distribution components 100 can be installed in the plurality of mounting holes 203 one by one.

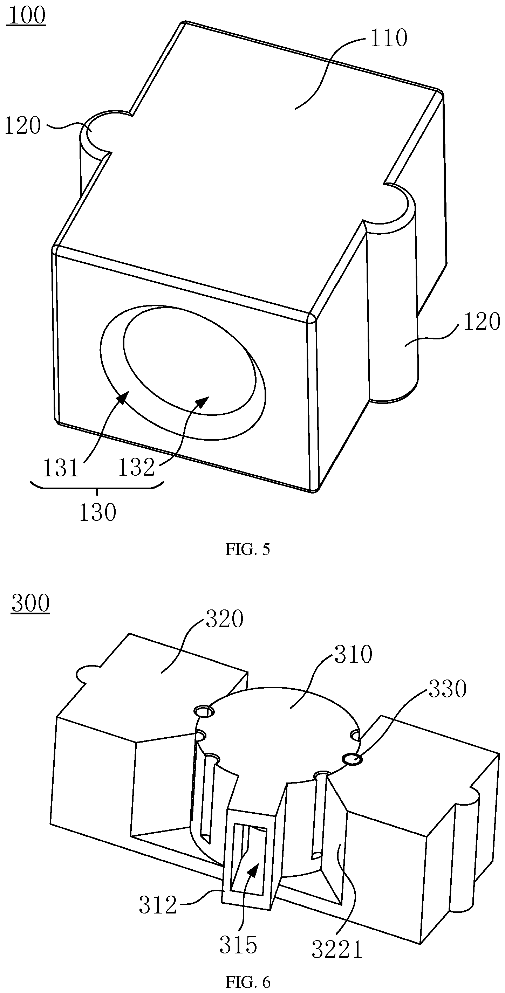

Each of the flow distribution component 100 is configured to distribute the medium placed in the flow guide channel 201 into the battery compartment 202, and at least two of the flow distribution components 100 can distribute the medium placed in the flow guide channel 201 into the battery compartments 202 at different flow velocities. For example, as shown in FIG. 5, each of the plurality of flow distribution components 100 is provided with at least one flow guide hole 130, and the numbers of the flow guide holes 130 on the plurality of flow distribution components 100 are the same. Each flow distribution component 100 is configured to distribute, through its flow guide hole 130, the medium placed in the flow guide channel 201 into the battery compartment 202 that is in communication with the flow distribution component 100. Alternatively, it can be understood that the flow distribution component 100 is configured to distribute the medium through its flow guide holes 130, such as distributing the medium into the battery compartment 202 that is in communication with the flow distribution component 100, or distributing the medium into the correspondingly communicated battery compartment 202.

In some embodiments, the flow guide holes 130 of at least two of the flow distribution components 100 have different sizes. For example, the plurality of flow distribution components 100 include one or more first flow distribution components and one or more second flow distribution components. The difference between the first flow distribution component and the second flow distribution component is that the sizes of their guide holes are different. For example, the flow guide hole of the first flow distribution component is larger than the flow guide hole of the second flow distribution component. In this way, when both the first flow distribution component and the second flow distribution component are distributing the medium, the capacity of the first flow distribution component to distribute the medium is greater than that of the second flow distribution component, or in other words, the flow velocity of the medium distributed by the first flow distribution component is greater than the flow velocity of the medium distributed by the second flow distribution component.

In some embodiments, the different sizes of the flow guide holes 130 of at least two flow distribution components 100 include the different diameters of the flow guide holes 130 of at least two flow distribution components 100.

In some embodiments, the flow guide hole 130 includes a first hole 131 and a second hole 132 that are in communication with each other. The first hole 131 is in communication with the flow guide channel 201, and the second hole 132 is in communication with the battery compartment 202. The diameter of the first hole 131 gradually decreases from one side of the flow distribution component 100 near the flow guide channel 201 to an opposite side of the flow distribution component 100, and the diameter of the first hole 131 is larger than the diameter of the second hole 132.

In some embodiments, please refer to IFG. 2 again, a top end of the flow guide plate 210 is flush with a top end of the flow distribution component 100, or in other words, one end of the flow guide plate 210 away from the bottom plate 220 is flush with one end of the flow distribution component 100 away from the bottom plate 220. It should be understood that the top end of the flow guide plate 210 and the top end of the flow distribution component 100 defined in the embodiments of the present disclosure are substantially flush with each other, which is within a processing error range.

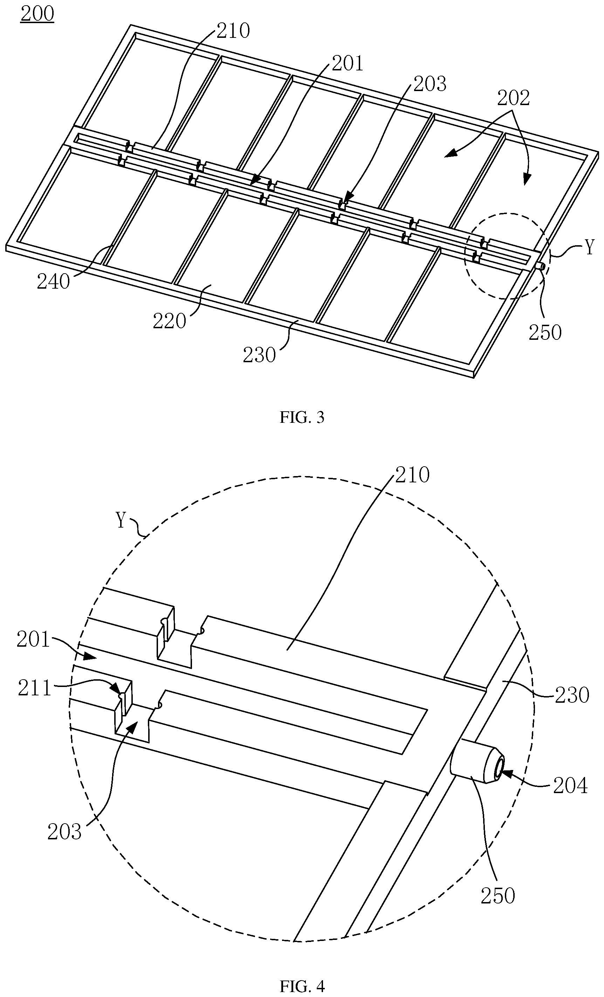

In some embodiments, the flow distribution component 100 and the rack body 200 are detachably connected via detachable structures. For example, as shown in FIG. 4 and FIG. 5, the flow distribution component 100 includes a flow distribution body 110 and a first detachable structure 120 that are connected to each other, and the flow guide plate 210 is provided with a second detachable structure 211 in each of the mounting holes 203. The first detachable structure 120 and the second detachable structure 211 are detachably connected, to achieve a detachable connection between the flow distribution component 100 and the rack body 200. Specifically, when the flow distribution body 110 is installed in the mounting hole 203, the first detachable structure 120 and the second detachable structure 211 are connected.

In some embodiments, one of the first detachable structure 120 and the second detachable structure 211 includes a connecting pillar, and the other includes a connecting slot, and the connecting pillar can be installed in the connecting slot. For example, the first detachable structure 120 includes one or more connecting pillars, and the second detachable structure 211 includes one or more connecting slots. The number of the connecting slots is the same as the number of the connecting pillars. The embodiments of the present disclosure are described by taking the first detachable structure 120 including two connecting pillars and the second detachable structure 211 including two connecting slots as an example.

In some embodiments, a cross section of the connecting pillar is an arc-shaped structure, and the shape and the size of the connecting slot are matched with the shape and the size of the connecting pillar, respectively. It should be noted that the connecting pillar and the connecting slot may also adopt other shapes, which are not limited here.

In some embodiments, a top end of the connecting pillar is flush with a top end of the flow guide plate 210 and a top end of the flow distribution body 110. Or in other words, the top end of the connecting pillar, the top end of the flow guide plate 210 and the top end of the flow distribution body 110 are substantially flush.

In some embodiments, the side wall of the flow distribution body 110 is flush with the side wall of the flow guide plate 210. The side wall of the flow guide plate 210 is connected between the top end and the bottom end of the flow guide plate 210. The side wall of the flow distribution body 110 is connected between the top end and the bottom end of the flow distribution body 110.

It should be noted that the manner in which the flow distribution component 100 achieves different flow velocities of the distributed medium is not limited to that the flow guide holes 130 of at least two of the flow distribution components 100 have the same number but different sizes.

In other optional embodiments, the flow guide holes of at least two flow distribution components have different numbers and different sizes. This embodiment has the same technical effects as the above-mentioned embodiments of the present disclosure, which will not be described here again.

In other optional embodiments, the flow guide holes of at least two flow distribution components have different numbers but the same size. This embodiment has the same technical effects as the above-mentioned above-mentioned embodiments of the present disclosure, which will not be described here again.

It should be noted that the way to achieve the technical effects of the embodiments of the present disclosure is not limited to the battery rack 10 illustrated in FIG. 1 to FIG. 5. Other battery racks can also be adopted to achieve corresponding technical effects. An exemplary description is given below in conjunction with other drawings.

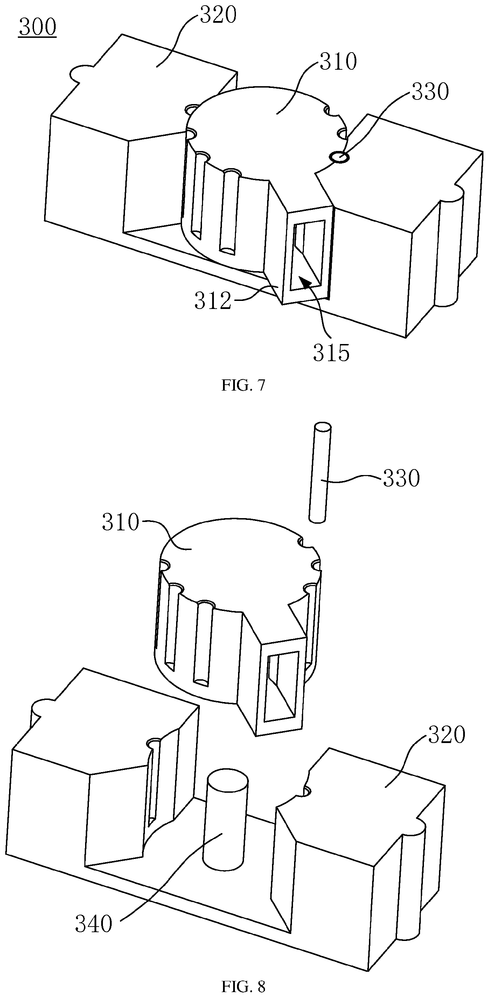

As shown in FIG. 6 to FIG. 11, a flow distribution assembly 300 includes a mounting component 320 and a flow distribution component 310. The flow distribution component 310 is connected to the mounting component 320, and can rotate relative to the mounting component 320, so as to change a flow direction in which the flow distribution component 310 distributes the medium, or to change the flow direction of the medium distributed by the flow distribution component 310. In some situations, the flow distribution component 310 is provided with a flow guide hole 315, and the flow distribution component 310 is configured to distribute a medium through the flow guide hole 315 thereof. During the rotation of the flow distribution component 310 relative to the mounting component 320, the flow direction of the medium distributed through the flow guide hole 315 can be changed. Specifically, different states of the flow distribution assembly 300 can be referred to in FIG. 6 and FIG. 7, which shows different flow directions of the medium distributed by the flow distribution component 310. It should be understood that the flow direction of the medium distributed by the flow distribution component 310 in the embodiments of the present disclosure is not limited to the two states shown in FIG. 6 and FIG. 7. The embodiments of the present disclosure are only illustrative and will not be explained one by one here.

In the case of applying the flow distribution assembly 300 to a battery rack in an immersed flow field, the flexibility of adjusting the flow distribution assembly 300 can be greatly improved. For positions with high flow velocities, the resistance caused by the sharp turning of fluid can be reduced. At the same time, targeted cooling can be carried out. When there are obvious high-temperature areas during testing or pre design, the flow distribution component 310 can be rotated to adjust a flow direction of the fluid, so that the flow distribution assembly 300 distributes the medium to the predetermined position, thereby targetedly increasing the flow velocity of the medium at the predetermined position and reducing the temperature of a surrounding area of the predetermined position by using only the same set of flow distribution assemblies 300, without the need to redesign and develop new battery racks. Compared to related technologies, the battery rack of the present disclosure can greatly reduce costs, shorten research and development cycles, and improve the temperature uniformity of battery devices during charging and discharging.

The flow distribution component 310 and the mounting component 320 can change their positions relative to each other. For example, the flow distribution component 310 and the mounting component 320 can rotate relative to each other. In one situation, as shown in FIG. 8, the flow distribution component 310 and the mounting component 320 are connected via a rotating shaft 340. For example, one of the flow distribution component 310 and the mounting component 320 is fixed to the rotating shaft 340, and the other is sleeved on the rotating shaft 340 and can rotate around the rotating shaft 340. In some embodiemnts, as shown in FIG. 8 to FIG. 11, the rotating shaft 340 and the mounting component 320 are fixed, such as being integrally configured. The flow distribution component 310 is provided with a shaft hole 316, and the rotating shaft 340 is installed in the shaft hole 316, so that the flow distribution component 310 can rotate around the rotating shaft 340, achieving rotation of the flow distribution component 310 relative to the mounting component 320.

It should be noted that the flow distribution component 310 of the present disclosure rotates relative to the installation component 320, which can change the flow direction of the medium distributed through the flow guide hole 315. In practical applications, when the flow distribution assembly 300 is applied to a battery rack in an immersed flow field, the outlet 314 of the flow distribution component 310 that is in communication with the flow guide hole 315 should always maintain communication with the battery compartment of the battery rack. In this way, during the rotation of the flow distribution component 310 relative to the mounting component 320, it can be ensured that the outlet 314 of the flow distribution component 310 maintains communication with the battery compartment of the battery rack. For example, during the rotation of the flow distribution component 310 relative to the mounting component 320, the outlet 314 of the flow distribution component 310 is maintained on the other side of the mounting component 320 facing the battery compartment 202.

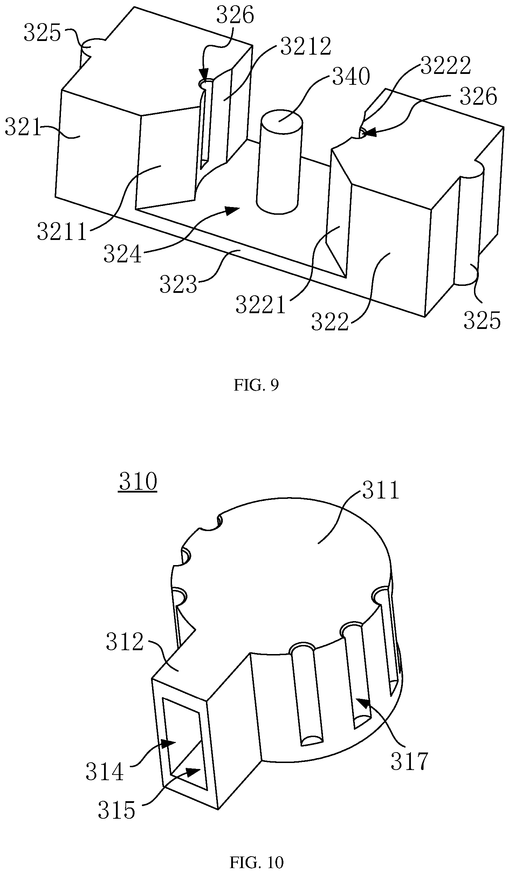

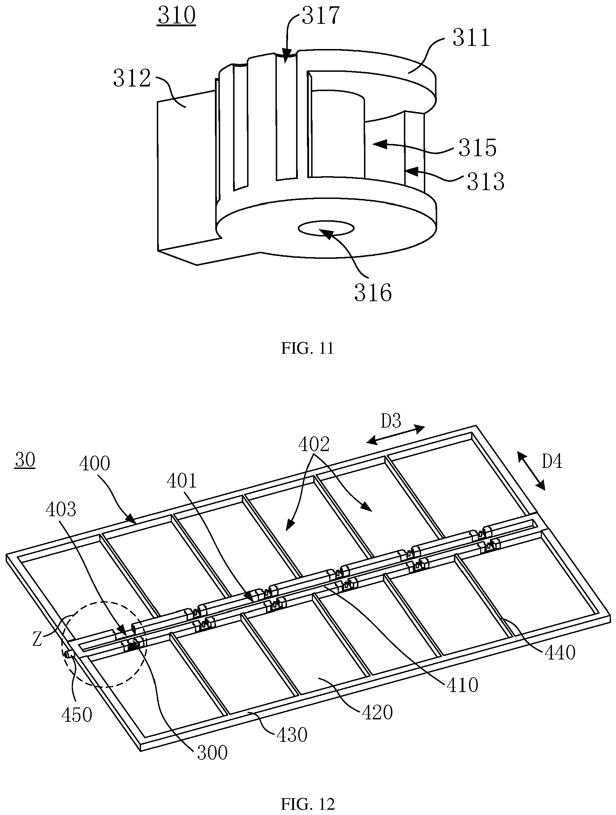

In some embodiemnts, as shown in FIG. 10 and FIG. 11, the flow distribution component 310 is further provided with an inlet 313 that is in communication with the outlet 314 through the flow guide hole 315. During the rotation of the flow distribution component 310 relative to the mounting component 320, the inlet 313 is maintained on one side of the mounting component 320 facing the flow guide channel 201, and the outlet 314 is maintained on an opposite side of the mounting component 320 facing the battery compartment 202. It should be noted that the inlet 313 is maintained on one side of the mounting component 320 facing the flow guide channel 201, which can ensure that the flow distribution component 310 can maintain communication with the flow guide channel 201 of the battery rack.

In some embodiemnts, the flow distribution component 310 includes a flow distribution body 311 and a limiting structure 312 that are connected to each other. The flow distribution body 311 is connected to the mounting component 320, and the flow distribution body 311 can rotate relative to the mounting component 320. During the rotation of the flow distribution body 311 relative to the mounting component 320, the limiting structure 312 can limit the rotation range of the flow distribution body 311 relative to the mounting component 320, so that the inlet 313 is maintained on one side of the mounting component 320 facing flow guide channel 201, while the outlet 314 is maintained on the other side of the mounting component 320 facing the battery compartment 202. In this way, in the case that the flow distribution assembly 300 is applied to a battery rack in an immersed flow field, the limiting structure 312 can keep the inlet 313 in communication with the flow guide channel 201, while the outlet 314 in communication with the battery compartment 202.

In some embodiemnts, the outlet 314 may be provided on the limiting structure 312, so that the flow guide hole 315 penetrates the limiting structure 312 and the flow distribution body 311. In the embodiments of the present disclosure, the limiting structure 312 is referred to as a nozzle. The inlet 313 is provided on the flow distribution body 311.

In other optional embodiments, the outlet 314 is also provided on the flow distribution body 311. The limiting structure 312 may be two limiting plate structures arranged on both sides of the outlet 314, or a limiting protrusion structure, which can also play a role in limiting the rotation range of the flow distribution body 311 relative to the mounting component 320.

In some embodiemnts, the size of the inlet 313 is larger than the size of the outlet 314.

The mounting component 320 is used as a carrier of the flow distribution component 310. When the flow distribution assembly 300 of the present disclosure is applied to a battery rack in an immersed flow field, the mounting component 320 is configured to be detachably installed in the mounting hole of the battery rack. For example, the battery rack may include a rack body having mounting holes and flow distribution assemblies 300, where the flow distribution assemblies 300 may be detachably mounted in the mounting holes of the rack body. An exemplary description is given below in conjunction with the accompanying drawings of a battery rack.

As shown in FIG. 9, the mounting component 320 includes a first mounting portion 321, a middle mounting portion 323 and a second mounting portion 322 that are connected in sequence. That is, the middle mounting portion 323 is connected between the first mounting portion 321 and the second mounting portion 322. The first mounting portion 321, the middle mounting portion 323 and the second mounting portion 322 can be set as a whole. The middle mounting portion 323 is connected between a bottom end of the first mounting portion 321 and a bottom end of the second mounting portion 322.

The first installation portion 321, the middle installation portion 323 and the second installation portion 322 together define a mounting space 324. The flow distribution body 310 is mounted in the mounting space 324, and the middle installation portion 323 is located below the flow distribution body 310. The rotating shaft 340 is connected to the middle mounting portion 323, such as being integrally arranged, and the rotating shaft 340 is located between the first mounting portion 321 and the second mounting portion 322. In some embodiemnts, the middle installation portion 323 has a regular shape, and the rotating shaft 340 is provided at the center of the middle installation portion 323.

In some embodiemnts, a top end of the first mounting portion 321, a top end of the second mounting portion 322, and the top end of the flow distribution body 310 are flush. It should be understood that the top end of the first mounting portion 321, the top end of the second mounting portion 322, and the top end of the flow distribution body 310 defined in the embodiments of the present disclosure are substantially flush, which means that the top ends of the three are substantially flush, within the range of processing error.

In some embodiemnts, the first mounting portion 321 includes a first limiting surface 3211, and when the limiting structure 312, such as a nozzle, abuts against the first mounting portion 321, one side surface of the nozzle 312 fits against the first limiting surface 3211. In some embodiemnts, the second mounting portion 3212 includes a second limiting surface 3221, and when the nozzle 312 abuts against the second mounting portion 322, an opposite side surface of the nozzle 312 fits against the second limiting surface 3221. It should be understood that the two side surfaces of the nozzle 312 are adapted to the shapes of the first limiting surface 3211 and the second limiting surface 3221, so that in the process of adjusting the flow distribution body 311 to rotate relative to the mounting component 320, the nozzle 312 fits with the first limiting surface 3211 when it is in contact with the first mounting portion 321, and the nozzle 312 fits with the second limiting surface 3221 when it is in contact with the second mounting portion 322. In this way, it can not only increase the contact stability between the nozzle 312 and the first mounting portion 321 and the second mounting portion 322, but also prevent the nozzle 312, the first limiting surface 3211 and the second limiting surface 3221 from being damaged during actual operation.

In some embodiemnts, the first limiting surface 3211 is connected to a side surface of the first mounting portion 321 and is inclined relative to the side surface of the first mounting portion 321. The second limiting surface 3221 is connected to a side surface of the second mounting portion 322 and is inclined relative to the side surface of the second mounting portion 322. In some embodiemnts, an inclination between the first limiting surface 3211 and the first mounting portion 321 is the same as an inclination between the second limiting surface 3221 and the second mounting portion 322.

The first mounting portion 321 includes a first side surface and a second side surface that are arranged opposite to each other along a width direction of the first mounting portion 321, where the first limiting surface 3211 is connected to the first side surface and is inclined relative to the first side surface. The first mounting portion 321 further includes a first end surface connecting between the first side surface and the second side surface, where the first end surface is away from the second mounting portion 322.

The second mounting portion 322 includes a third side surface and a fourth side surface that are arranged opposite to each other along a width direction of the second mounting portion 322, where the second limiting surface 3221 is connected to the third side surface and is inclined relative to the second side surface. The second mounting portion 322 further includes a second end surface connecting between the third side surface and the fourth side surface, where the second end surface is away from the first mounting portion 321. The first side surface is closer to the outlet 314 than the second side surface, and the third side surface is closer to the outlet 314 than the fourth side surface.

The first limiting surface 3211 and the second limiting surface 3221 are arranged to be inclined relative to each other, and a distance between the first limiting surface 3211 and the second limiting surface 3221 gradually changes along the width direction of the mounting component 320. In some embodiemnts, the distance between the first limiting surface 3211 and the second limiting surface 3221 gradually increases along a direction from the inlet 313 to the outlet 314. Or it can be understood that the distance between the first limiting surface 3211 and the second limiting surface 3221 gradually decreases from the first side surface to the second side surface along the width direction of the mounting component 320. Or the distance between the first limiting surface 3211 and the second limiting surface 3221 gradually decreases from the third side surface to the fourth side surface along the width direction of the mounting component 320. So that the first limiting surface 3211 and the second limiting surface 3221 are in a shape of a Chinese character " 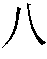 ". The width direction of the mounting component 320 may be understood as the width direction of the flow distribution assembly 300.

In some embodiemnts, the shape of the first limiting surface 3211 is substantially the same as the shape of the second limiting surface 3221, for example, the first limiting surface 3211 and the second limiting surface 3221 are both rectangular. In some embodiemnts, the size of the first limiting surface 3211 is substantially equal to the size of the second limiting surface 3221.

In some embodiemnts, the first mounting portion 321 includes a first arc-shaped surface 3212, the second mounting portion 322 includes a second arc-shaped surface 3222, and the first arc-shaped surface 3212 and the second arc-shaped surface 3222 are opposite to each other. A side surface of the flow distribution body 310 is matched with the first arc-shaped surface 3212 and the second arc-shaped surface 3222, making the connection between the flow distribution body 310 and the mounting component 320 more compact and stable.

In some embodiemnts, the first mounting portion 321 and the second mounting portion 322 are symmetrically arranged relative to the middle mounting portion 323.

In practical applications, for a adjusted flow distribution component 310, it is easy for the flow distribution component 310 to experience a displacement change relative to the mounting component 320 due to the flow of the medium or other external factors. It should be understood that the displacement change defined in the embodiments of the present disclosure is a rotational change caused by the flow distribution component 310 relative to the mounting component 320. In some embodiments, as shown in FIG. 6 and FIG. 7, the flow distribution assembly 300 of the present disclosure further includes a positioning component 330, which connects the mounting component 320 and the flow distribution component 310 to limit the flow distribution component 310 from rotating relative to the mounting component 310.

It should be noted that the positioning component 330 is connected to the mounting component 320 and the flow distribution component 310 after the flow distribution component 310 is adjusted to an appropriate position.

In some embodiemnts, as shown in FIG. 9 and FIG. 10, the mounting component 320 is provided with at least one first positioning groove 326 in at least one of the first arc-shaped surface 3212 and the second arc-shaped surface 3222, and the side surface of the flow distribution component 310 is provided with a plurality of second positioning grooves 317 arranged at intervals along the rotation direction of the flow distribution body 311. The positioning component 330 can be installed in one of the first positioning grooves 326 and one of the second positioning grooves 317 to limit the flow distribution component 310 from rotating relative to the mounting component 320.

In some embodiemnts, the mounting component 320 is provided with two first positioning grooves 326, one first positioning groove 326 is formed in the first arc-shaped surface 3212 of the first mounting portion 321, and the other first positioning groove 326 is formed in the second arc-shaped surface 3222 of the second mounting portion 322, and the first positioning groove 326 on the first mounting portion 321 and the first positioning groove 326 on the second mounting portion 322 are opposite.

It should be noted that, in the positioning component 330 in the embodiments of the present disclosure, the positioning manner between the flow distribution component 310 and the mounting component 320 is not limited to this. The embodiments of the present disclosure does not limit how the positioning component 330 limits the positioning manner between the flow distribution component 310 and the mounting component 320.

In some embodiemnts, at least one of the first mounting portion 321 and the second mounting portion 322 is provided with a first detachable structure 325, and at least one of the first mounting portion 321 and the second mounting portion 322 is detachably connected to the rack body of the battery rack through the first detachable structure 325. In some embodiemnts, both the first mounting portion 321 and the second mounting portion 322 are provided with the first detachable structure 325.

In some embodiemnts, the first detachable structure 325 is arranged on a side of the first mounting portion 321 and the second mounting portion 322 away from the flow distribution component 310.

It should be noted that the flow distribution component 310 of the embodiments of the present disclosure is also detachably connected to the rotating shaft 340 and the mounting component 320. Therefore, the flow distribution component 310 of appropriate specifications can be installed on the rotating shaft 340 and the mounting component 320 according to requirements. In some cases, the mounting components 320 of a plurality of flow distribution assemblies 300 have the same shape, and the flow guide holes 315 of the flow distribution components 310 of the plurality of flow distribution assemblies 300 have the same size, that is, the shapes of the plurality of flow distribution components 310 are the same.

In other cases, the mounting components 320 of the plurality of flow distribution assemblies 300 have the same shape, while the flow guide holes 315 of the flow distribution components 310 of the plurality of flow distribution assemblies 300 have different sizes. Therefore, the embodiments of the present disclosure can not only adjust the flow direction of the medium distributed by the flow distribution component 310, but also replace the flow distribution components 310 with different specifications to change the flow velocity of the medium distributed by the flow distribution assembly 300.

In other cases, the mounting components 320 of the plurality of flow distribution assemblies 300 have the same shape, while the numbers of the flow guide holes 315 of the flow distribution components 310 of the plurality of flow distribution assemblies 300 are different. Therefore, the embodiments of the present disclosure can not only adjust the flow direction of the medium distributed by the flow distribution component 310, but also replace the flow distribution components 310 with different specifications to change the flow velocity of the medium distributed by the flow distribution assembly 300.

Regarding the different sizes or numbers of the flow guide holes 315 of the flow distribution components 310, reference can be made to the contents shown in FIG. 1 to FIG. 5, which will not be described repeatedly herein.

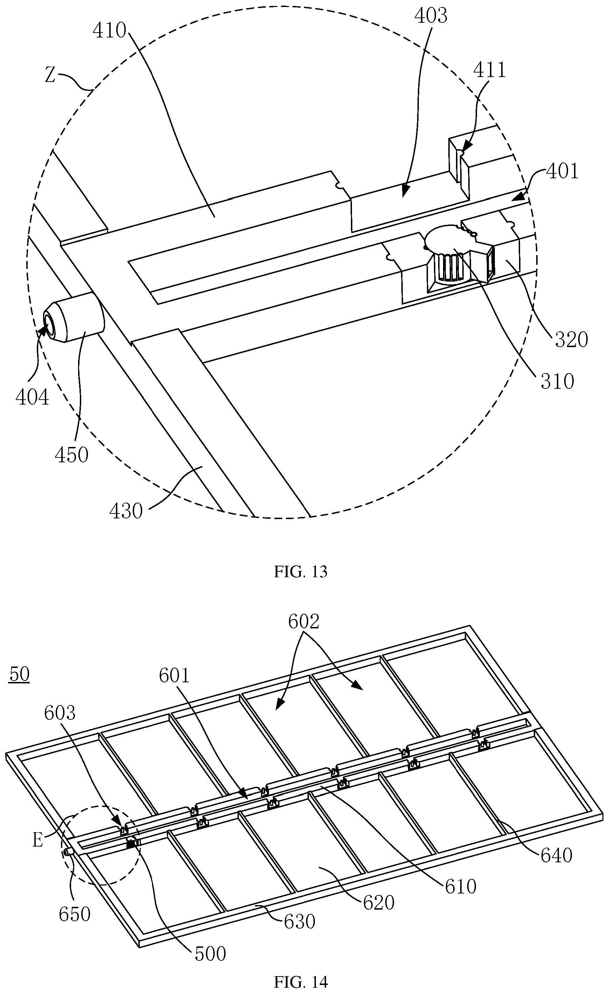

As shown in FIG. 12 and FIG. 13, the battery rack 30 includes a rack body 400 and a plurality of flow distribution assemblies 300. The flow distribution assemblies 300 are detachably connected to the rack body 400. Therefore, the number and the installation positions of the flow distribution assemblies 300 installed on the rack body 400 can be configured according to actual needs. FIG. 12 schematically shows an installation relationship between one flow distribution assembly 300 and the rack body 400. It can be understood that FIG. 12 is an exemplary diagram, and the number of the flow distribution assemblies 300 illustrated in FIG. 12 does not constitute a limitation on the number of the flow distribution assemblies 300 of the embodiments of the present disclosure.

Reference of the plurality of flow distribution assemblies 300 can be made to the flow distribution assemblies 300 shown in FIG. 6 to FIG. 11, which will not be described repeatedly herein. It should be understood that the detachable connection between the flow distribution assembly 300 and the rack body 400 can be understood as two parts. Specifically, the mounting component 320 of the flow distribution assembly 300 and the rack body 400 are detachably connected, and the flow distribution component 310 and the mounting component 320 are detachably connected.

It should be noted that the flow distribution component 310 of any flow distribution assembly 300 may not always need to be installed on the rack body 400 together with the mounting component 320 of the flow distribution assembly 300. For example, the mounting portions 320 of some of the flow distribution assemblies 300 are installed on the rack body 400, while the flow distribution components 310 of these flow distribution assemblies 300 are not installed on the rack body 400. For another example, the mounting portions 320 and the flow distribution components 310 of all the flow distribution assemblies 300 are mounted on the rack body 400.

In some embodiemnts, the shapes and the sizes of the plurality of mounting components 320 of the battery rack 30 are substantially the same, which facilitates processing and forming. For example, the contours of the plurality of flow distribution components 310 are substantially consistent, which facilitates processing and molding of the flow distribution components 310. In an optional embodiment, the medium distribution capabilities of the plurality of flow distribution components 310 are substantially the same, for example, the sizes of the flow guide holes 315 of the plurality of flow distribution components 310 are substantially the same, and the numbers of the flow guide holes 315 are substantially the same. In other optional embodiments, the flow guide holes 315 of at least two of the plurality flow distribution components 310 have different sizes, such as different apertures. For specific examples, please refer to the contents shown in FIG. 1 to FIG. 5, which will not be described repeatedly herein. In other optional embodiments, at least two of the plurality of flow distribution components 310 have different numbers of guide holes 315. For specific examples, please refer to the contents shown in FIG. 1 to FIG.5, which will not be described repeatedly herein.

Please referring to FIG. 1 again, in the embodiments, a length direction D3 and a width direction D4 of the battery rack 30 are substantially perpendicular to each other.

An overall structure of the rack body 400 of the embodiments of the present disclosure is similar to an overall structure of the rack body 200, For example, the rack body 400 is provided with a flow guide channel 401, a plurality of battery compartments 402, and a plurality of mounting holes 403. The plurality of battery compartments 402 are in communication with the plurality of mounting holes 403, and each battery compartment 402 is in communication with at least one mounting hole 403. The embodiments of the present disclosure take the plurality of battery compartments 402 being in one-to-one communication with the plurality of mounting holes 403 as an example. The flow guide channel 401 is in communication with the plurality of mounting holes 403. It should be understood that when the mounting holes 403 are not installed with the flow distribution assembly 300, the flow guide channel 401 directly communicates with the plurality of battery compartments 402 through the plurality of mounting holes 403.

The plurality of battery compartments 402 can be divided into two groups, with one group being located at one side of the flow guide channel 403, and the other group being located at the other side of the flow guide channel 403. One group of battery compartments 402, the flow guide channel 403, and the other group of battery compartments 402 are sequentially arranged in the width direction D4 of the battery rack 30. There are a plurality of battery compartments 402 on both sides of the flow guide channel 403, and the plurality of battery compartments 402 on the same side of the flow guide channel 403 are arranged at intervals in sequence along the length direction D3 of the battery rack 30.

The rack body 400 includes a guide plate 410, a bottom plate 420, side plates 430, and a plurality of partition plates 440. The flow guide plate 410, the side plates 430, and the partition plates 440 are all connected to the same surface of the bottom plate 420, to define the plurality of battery compartments 402. The flow guide plate 410, the side plates 430 and the bottom plate 420 together define the flow guide channel 401. The plurality of mounting holes 403 are all formed on the flow guide plate 410.

For example, the side plates 430 are connected to circumference edges of the bottom plate 420, and the plurality of partition plates 440 and the flow guide plate 410 are surrounded by the side plates 430. For example, the side plates 430 may surround the bottom plate 420 and form a cuboid space together with the bottom plate 220. The flow guide plate 210 extends along the length direction D1 of the battery rack 10. Each of the plurality of partition plates 440 extends along the width direction D4 of the battery rack 30, and one end of each of the plurality of partition plates 440 is connected to an inner surface of the side plate 430, and the other end of each of the plurality of partition plates 440 is connected to the flow guide plate 410.

In some embodiemnts, there are two guide plates 410, which are spaced apart from each other along the width direction D4 of the battery rack 30. The two flow guide plates 410 are spaced apart by the flow guide channel 401. One end of each of the two guide plates 410 is connected to an inner surface of the side plate 430 located at one side of the rack body 400, and the other end of each of the two guide plates 410 is connected to an inner surface of an other side plate 430 located on an opposite side of the rack body 400.

The plurality of partition plates 440 may be divided into two groups, with the two groups of partition plates 440 corresponding one-to-one with the two groups of battery compartments 402. The same group of partition plates 240 are spaced along the length direction D1 of the battery rack 10, with one battery compartment 402 between two adjacent partition plates 440.

Each flow guide plate 410 is provided with a plurality of mounting holes 401, and each mounting hole 401 can directly communicate with one battery compartment 402 and the flow guide channel 401. In some embodiemnts, the number of mounting holes 401 formed on the two guide plates 410 is the same. For example, the positions of the mounting holes 401 formed on one of the two guide plates 410 are opposite to the positions of the mounting holes 401 formed on the other one of the two guide plates 410. It should be noted that the positions and the numbers of the mounting holes 401 provided on the plurality of guide plates 410 can be set according to actual needs.

In some embodiemnts, the two guide plates 410 are substantially flush with each other at surfaces away from the bottom plate 420.

In some embodiemnts, the height of the two guide plates 410 is not higher than the height of the side plate 430. For example, one side of the two guide plates 410 away from the bottom plate 420 is substantially flush with one side of the side plate 430 away from the bottom plate 420. Another example is that one side of the two guide plates 410 away from the bottom plate 420 is slightly lower than one side of the side plate 430 away from the bottom plate 220. In other words, a vertical distance between a top surface of the two guide plates 410 and the bottom plate 420 is not greater than a vertical distance between a top surface of the side plate 430 and the bottom plate 420.

The battery rack 400 is further provided with a flow inlet 404, which penetrates one of the side plates 430 adjacent to the flow guide channel 401, and communicates with the flow guide channel 401.

The battery rack 400 is further provided with a connector 450. The connector 450 is connected to an outer surface of the one of the side plates 430. The flow inlet 404 penetrates the connector 450 and the one of the side plate 430, and communicates with the flow guide channel 401.

Each battery compartment 402 can accommodate a cell, or a battery component.

The flow distribution component 310 is configured to distribute, through its flow guide holes 315, the medium placed in the flow guide channel 401 into the battery compartment 402 connected that is in communication with the flow distribution component 310.

The flow guide plate 410 is provided with a second detachable structure 411 in each of the mounting holes 403. The first detachable structure 325 provided on the mounting component 320 and the second detachable structure 411 provided on the flow guide plate 410 are detachably connected, to achieve a detachable connection between the mounting component 320 and the rack body 400. Specifically, when the mounting component 320 is installed in the mounting hole 403, the first detachable structure 325 and the second detachable structure 411 are connected.

In some embodiemnts, one of the first detachable structure 325 and the second detachable structure 411 includes a connecting pillar, and the other includes a connecting slot, and the connecting pillar can be installed in the connecting slot. For example, the first detachable structure 325 includes one or more connecting pillars, and the second detachable structure 411 includes one or more connecting slots. The number of the connecting slots is the same as the number of the connecting pillars. The embodiments of the present disclosure are described by taking the first detachable structure 325 including two connecting pillars and the second detachable structure 411 including two connecting slots as an example.

In some embodiemnts, a cross section of the connecting pillar is an arc-shaped structure, and the shape and the size of the connecting slot are matched with the shape and the size of the connecting pillar, respectively. It should be noted that the connecting pillar and the connecting slot may also adopt other shapes, which are not limited here.

In some embodiemnts, a top end of the connecting pillar is flush with a top end of the flow guide plate 410, a top end of the mounting component 320, and a top end of the flow distribution body 311. Or the top end of the connecting pillar, the top end of the flow guide plate 410, the top end of the mounting component 320, and the top end of the flow distribution body 311 are substantially flush.

In some embodiemnts, the side wall of the mounting component 320 is flush with the side wall of the flow guide plate 410. The side wall of the flow guide plate 410 is connected between the top end and the bottom end of the flow guide plate 410. The side wall of the mounting component 320 is connected between the top end and the bottom end of the mounting component 320.

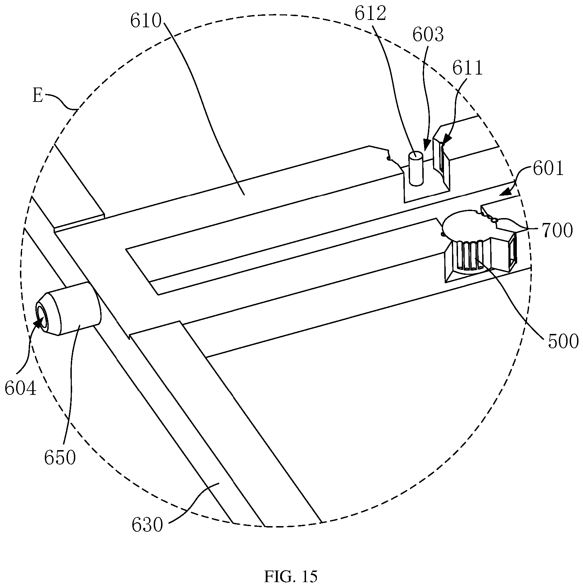

As shown in FIG. 14 and FIG. 15, a battery rack 50 includes a rack body 600 and a plurality of flow distribution components 500. The flow distribution components 500 are detachably connected to the rack body 400, and the flow distribution components 500 are rotatable relative to the rack body 600. Compared with the battery rack 50 shown in FIG. 12 and FIG. 13, the flow distribution component 500 of the embodiments of the present disclosure can rotate directly relative to the rack body 600, which is different from the flow distribution component 310 rotating relative to the mounting component 320, and the mounting component 320 is detachably connected to the rack body 400.

The flow distribution component 500 may refer to the flow distribution component 310 and will not be described repeatedly herein.

The difference between the rack body 600 and the rack body 400 is that the shape of the flow guide plate 610 is different from the shape of the flow guide plate 410. Forx example, the difference between the rack body 600 and the rack body 400 includes that: the flow guide plate 610 is provided with a rotating shaft 612 at the bottom of its mounting hole 603, where the flow distribution component 500 is connected to the rotating shaft 612, and the flow distribution component 500 can rotate around the rotating shaft 612 relative to the flow guide plate 610.

The difference between the rack body 600 and the rack body 400 further includes that: the flow guide plate 610 is provided with third positioning grooves 611 on both side walls of each mounting hole 603 thereof. The third positioning groove 611 can refer to the first positioning groove 326 of the mounting component 320 and will not be described repeatedly herein. The battery rack 50 further includes positioning components 700, which are connected to the flow distribution components 500 and the flow guide plate 610, to limit the flow distribution components 500 from rotating relative to the flow guide plate 610. For example, the positioning component 700 can be installed in the second positioning groove of the flow distribution component 500 and the third positioning groove 611 on the flow guide plate 610. The positioning component 700 may refer to the positioning component 330 and will not be described repeatedly herein.

The difference between the rack body 600 and the rack body 400 further includes that: the flow guide plate 610 is provided with two limiting surfaces on both side walls of the mounting hole 603 thereof. The two limiting surfaces can refer to the first limiting surface 3211 and the second limiting surface 3221 of the mounting component 320, which will not be described repeatedly herein.

The difference between the rack body 600 and the rack body 400 further includes that: the flow guide plate 610 is provided with two opposite arc-shaped surfaces on both side walls at the position of its mounting hole 603. The two opposite arc-shaped surfaces can refer to the first arc-shaped surface 3212 and the second arc-shaped surface 3222 of the mounting component 320, which will not be described repeatedly herein.

The flow guide channel 601, the flow inlet 604, and the battery compartments 602 of the rack body 600 may all refer to the rack body 400, and will not be described repeatedly herein.

The side plates 630, the bottom plate 620, the partition plates 640 and the connector 650 of the rack body 600 may all refer to the rack body 400, and will not be described repeatedly herein.

It should be noted that two parts of the flow distribution assembly 300 of the embodiments of the present disclosure are designed separately, which are the part connected to the rack body 400 and the part rotating relative to the rack body 400. Specifically, the flow distribution assembly 300 includes the flow distribution component 310 and the mounting component 320. The battery rack 30 and the battery rack 50 are compared below in combination with practical applications.

In practical applications, the nozzle 312 of the flow distribution component 310 may be optimized. When structural optimization is required, since the flow distribution component 310 and the mounting component 320 are detachably connected, the flow distribution component 310 and the mounting component 320 can be connected in a coordinated manner without modifying the rack body 400. The structure of the connection between the mounting component 320 and the rack body 400 does not need to be changed.

Since the flow guide plate 610 of the rack body 600 is provided with the rotating shafts 612, the rotating shafts 612 can be installed on the flow guide plate 610 by machining or riveting. However, during transportation and assembly, the rotating shaft 612 is easily damaged or deformed. The rotating shaft 340 is connected to the mounting component 320 and can be realized by injection molding. Even if it is damaged, it can be replaced at a low cost, and it is easier to inspect incoming materials, which is beneficial to production.

Compared to the flow distribution assembly 300, the flow distribution component 500 omits the mounting component 320, so that the flow distribution component 500 occupies a small space and can be applied to more subtle partition plates.

## Claims

1. A battery rack (10, 30, 50), comprising:
a rack body (200, 400, 600), wherein the rack body (200, 400, 600) is provided with a plurality of battery compartments (202, 402, 602), a plurality of mounting holes (203, 403, 603), and a flow guide channel (201, 401, 601); wherein each battery compartment (202, 402, 602) is in communication with at least one of the mounting holes (203, 403, 603), and the flow guide channel (201, 401, 601) is in communication with the plurality of mounting holes (203, 403, 603); and
a plurality of flow distribution components (100, 310, 500), wherein the plurality of flow distribution components (100, 310, 500) are detachably installed in the plurality of mounting holes (203, 403, 603) of the rack body (200, 400, 600), respectively; the flow distribution component (100, 310, 500) is provided with at least one flow guide hole (130, 315), and is configured to distribute, through its flow guide hole (130, 315), a medium placed in the flow guide channel (201, 401, 601) into the battery compartment (202, 402, 602) communicating with the flow guide hole (130, 315).

2. The battery rack (10, 30, 50) according to claim 1, wherein at least two of the flow distribution components (100, 310, 500) are capable of distributing the medium placed in the flow guide channel (201, 401, 601) into the battery compartments (202, 402, 602) at different flow velocities.

3. The battery rack (10, 30, 50) according to claim 1 or 2, wherein the flow guide holes (130, 315) of at least two of the flow distribution components (100, 310, 500) meet one of the following relationships:
the flow guide holes (130, 315) of at least two of the flow distribution components (100, 310, 500) have the same number but different sizes;
the flow guide holes (130, 315) of at least two of the flow distribution components (100, 310, 500) have different numbers and different sizes; and
the flow guide holes (130, 315) of at least two of the flow distribution components (100, 310, 500) have different numbers but the same size.

4. The battery rack (10, 30, 50) according to any one of claims 1 to 3, wherein the rack body (200, 400, 600) comprises a bottom plate (220, 420, 620), side plates (230, 430, 630), a plurality of partition plates (240, 440, 640), and flow guide plates (210, 410, 610); wherein the flow guide plate (210, 410, 610), the side plates (230, 430, 630), and the partition plates (240, 440, 640) are all connected to the same surface of the bottom plate (220, 420, 620), to together define the plurality of battery compartments (202, 402, 602);
the flow guide plate (210, 410, 610), the side plates (230, 430, 630), and the bottom plate (220, 420, 620) together define the flow guide channel (201, 401, 601); wherein the plurality of mounting holes (203, 403, 603) are all formed on the flow guide plate (210, 410, 610);
a top end of the flow guide plate (210, 410, 610) is flushed with a top end of the flow distribution component (100, 310, 500).

5. The battery rack (30) according to any one of claims 1 to 4, further comprising a plurality of mounting components (320) connected one-to-one with the plurality of flow distribution components (310); wherein the flow distribution component (310) is detachably installed in the mounting hole (403) through a corresponding mounting component (320).

6. The battery rack (30) according to claim 5, wherein the flow distribution component (310) is capable of rotating relative to the mounting component (320) to change a flow direction of the medium distributed through the flow guide hole (315).

7. The battery rack (30) according to claim 6, wherein the flow distribution component (310) is further provided with an inlet (313) and an outlet (314) that are in communication with each other through the flow guide hole (315);
wherein during a rotation of the flow distribution component (310) relative to the mounting component (320), the inlet (313) is at least partially maintained on one side of the mounting component (320), and the outlet (314) is at least partially maintained on an opposite side of the mounting component (320).

8. The battery rack (30) according to claim 7, wherein the flow distribution component (310) comprises a flow distribution body (311) and a nozzle (312) that are connected to each other; wherein the outlet (314) is provided on the nozzle (312), the inlet (313) is provided on the flow distribution body (311), and the flow guide hole (315) penetrates the flow distribution body (311) and the nozzle (312);
the flow distribution body (311) is connected to the mounting component (320), and is capable of rotating relative to the mounting component (320); the nozzle (312) is configured to limit a rotation range of the flow distribution body (311) relative to the mounting component (320).

9. The battery rack (30) according to claim 8, wherein the mounting component (320) comprises a first mounting portion (321), a middle mounting portion (323) and a second mounting portion (322) that are connected in sequence; wherein the first mounting portion (321), the middle mounting portion (323) and the second mounting portion (322) together define a mounting space (324);
wherein the flow distribution body (311) is mounted in the mounting space (324), with the middle mounting portion (323) located below the flow distribution body (311); the flow distribution body (311) is rotationally connected to the middle mounting portion (323); a top end of the first mounting portion (321), a top end of the second mounting portion (322) and a top end of the flow distribution body (311) are flush;
wherein during the rotation of the flow distribution body (311) relative to the mounting component (320), the nozzle (312) limits the rotation range of the flow distribution body (311) by abutting against the first mounting portion (321) or the second mounting portion (322).

10. The battery rack (30) according to claim 9, wherein the first mounting portion (321) comprises a first limiting surface (3211), and when the nozzle (312) abuts against the first mounting portion (321), one side surface of the nozzle (312) fits against the first limiting surface (3211);
the second mounting portion (322) comprises a second limiting surface (3221), and when the nozzle (312) abuts against the second mounting portion (322), an opposite side surface of the nozzle (312) fits against the second limiting surface (3221).

11. The battery rack (30) according to claim 10, wherein the first limiting surface (3211) and the second limiting surface (3221) are arranged to be inclined relative to each other; wherein a distance between the first limiting surface (3211) and the second limiting surface (3221) gradually increases along a direction from the inlet (313) to the outlet (314).

12. The battery rack (30) according to claim 7, wherein the flow distribution component (310) comprises a flow distribution body (311) and a limiting structure (311) that are connected to each other; wherein the flow distribution body (311) is provided with the flow guide hole (315), the inlet (313) and the outlet (314); wherein the limiting structure (311) is adjacent to the outlet (314);
wherein during the rotation of the flow distribution component (310) relative to the mounting component (320), the limiting structure (311) is configured to limit a rotation range of the flow distribution body (311) relative to the mounting component (320).

13. The battery rack (30) according to claim 6, wherein the mounting component (320) is provided with at least one first positioning groove (326); a side surface of the flow distribution component (310) is provided with a plurality of second positioning grooves (317) arranged at intervals along a rotation direction of the flow distribution component (310);
wherein the battery rack (30) further comprises a plurality of positioning components (330); wherein the positioning component (330) is configured to be installed in one of the first positioning grooves (326) and one of the second positioning grooves (317) to limit the flow distribution component (310) from rotating relative to the mounting component (320).

14. The battery rack (50) according to any one of claims 1 to 4, wherein the flow distribution component (500) is capable of rotating relative to the rack body (600) to change a flow direction of the medium distributed through the flow guide holes (130, 315).

15. The battery rack (50) according to claim 14, wherein the flow guide plate (610) is provided with a rotating shaft (612) at a bottom of each mounting hole (603), wherein the flow distribution component (500) is connected to the rotating shaft (612), and rotates around the rotating shaft (612) relative to the flow guide plate (610).

16. The battery rack (50) according to claim 15, wherein the flow guide plate (610) is provided with third positioning grooves (611) on both side walls of each mounting hole (603); a side surface of the flow distribution component (500) is provided with a plurality of second positioning grooves (317) arranged at intervals along a rotation direction of the flow distribution component (500);
wherein the battery rack (50) further comprises a plurality of positioning components (700); wherein the positioning component (700) is configured to be installed in the third positioning groove (611) and the second positioning groove (317) to limit the flow distribution component (500) from rotating relative to the flow guide plate (410).

17. The battery rack (10) according to claim 15, wherein the flow guide hole (130, 315) comprises a first hole (131) and a second hole (132) that are in communication with each other; wherein the first hole (131) is in communication with the flow guide channel (201), and the second hole (132) is in communication with the battery compartment (202); wherein a diameter of the first hole (131) gradually decreases from one side of the flow distribution component (100) near the flow guide channel (201) to the other side of the flow distribution component (100);
wherein the diameter of the first hole (131) is larger than a diameter of the second hole (132).
